# EUROPEAN PATENT APPLICATION

(11) **EP 4 169 710 A1**
(43) Date of publication of application: **26.04.2023**
(21) Application number: 21828028.7
(22) Date of filing: 17.06.2021
(51) Int. Cl.: B32B 27/00, E04F 15/02

(54) **FLOOR DECORATIVE SHEET AND METHOD FOR MANUFACTURING SAME AND FLOOR DECORATIVE MATERIAL AND METHOD FOR MANUFACTURING SAME**

(30) Priority: 22.06.2020 JP 2020107279
(71) Applicant: TOPPAN INC., Tokyo 110-0016 (JP)
(72) Inventor: SAITO Yuki, Tokyo 110-0016 (JP)
(74) Representative: TBK
(86) International application number: PCT/JP2021/023083
(87) International publication number: WO 2021/261379

(57) **Abstract**

The present application relates to, for example, a floor decorative sheet, a method of producing the same, a floor decorative material, and a method of producing the same. The present application provides a floor decorative sheet having excellent scratch resistance and abrasion resistance, as well as being thin, light weight, and flexible. The floor decorative sheet includes a primer layer (60), a print layer (20) made from an olefin-based resin, a pattern layer (30) printed on the print layer (20), an upper resin layer (40) made from a transparent polypropylene resin, and a surface protective layer (50) having an embossed pattern (51) formed thereon, which are laid to overlap each other in this order in form of a laminate. The upper resin layer (40) has a thickness of 150 µm or more, and the primer layer (60) and the print layer (20) are in direct contact with each other. The print layer (20) may have a thickness of 40 µm or more and 100 µm or less, and the upper resin layer (40) may have a thickness of 200 µm or less.

## Description

### [Technical Field]

The present invention generally relates to a floor decorative sheet used for, for example, a non-vinyl chloride flooring for heavy foot traffic, a method of producing the same, a floor decorative material, and a method of producing the same.

### [Background Art]

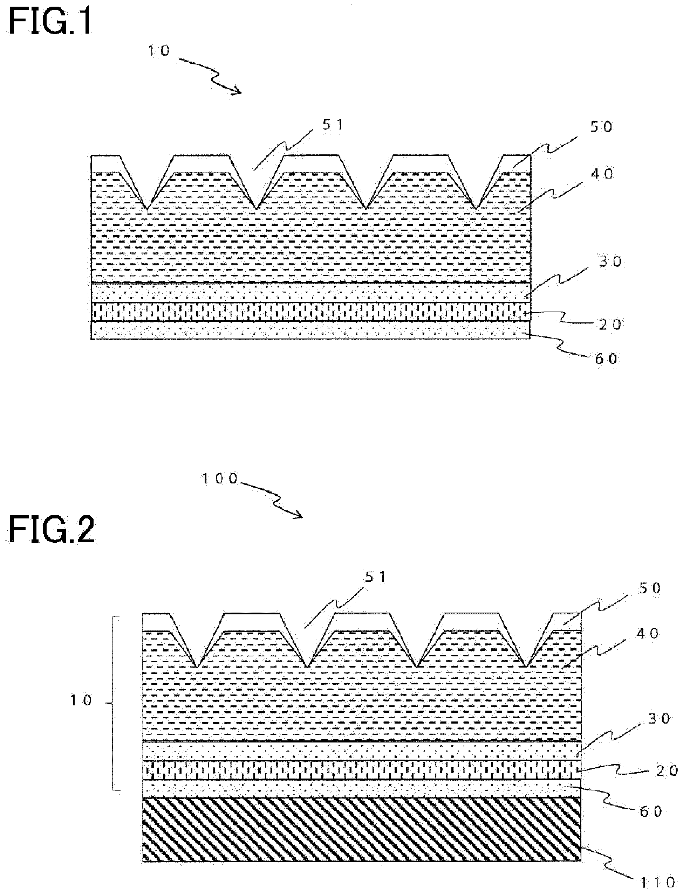

In the past, "decorative sheets" having a six-layer structure have been known, consisting of (1) a primer layer, (2) a lower resin layer formed of a transparent polypropylene resin, (3) a print layer formed of a polyethylene resin, (4) a pattern layer printed on the print layer, (5) an upper resin layer formed of a transparent polypropylene resin, and (6) a surface protective layer having an embossed pattern formed thereon, which are laid to overlap each other in this order in the form of a laminate (see paragraph [0010] and Fig. 1 of PTL1).

The conventional lower resin layer has a thickness of 125 µm or more and 150 µm or less, the print layer has a thickness of 55 µm or more and 100 µm or less, and the upper resin layer has a thickness of 150 µm or more and 200 µm or less (see paragraphs [0013], [0014], and [0021] of PTL1.).

### [Citation List]

### [Patent Literature]

PTL 1: JP 2017-154389 A

### [Summary of the Invention]

### [Technical Problem]

The conventional "decorative sheet" described above has excellent scratch resistance and abrasion resistance, but its six-layer structure makes the layer structure complex, and simplification of the structure, ease of production, and reduction of thickness are desired.

The object of the present invention is to provide a decorative sheet having excellent scratch resistance and abrasion resistance, simplified layer structure, ease of production, as well as being thin, light weight, and flexible.

### [Solution to Problem]

A floor decorative sheet according to one aspect of the present invention includes a primer layer; a print layer made from an olefin-based resin; a pattern layer printed on the print layer; an upper resin layer made from a transparent polypropylene resin; and a surface protective layer having an embossed pattern formed thereon, which are laid to overlap each other in this order in the form of a laminate. The upper resin layer has a thickness of 150 µm or more, and the primer layer and the print layer are in direct contact with each other.

In the floor decorative sheet according to one aspect of the present invention, the print layer has a thickness of 40 µm or more and 100 µm or less, and the upper resin layer has a thickness of 200 µm or less.

The floor decorative sheet according to one aspect of the present invention satisfies the requirements of CLASS 33 - EN 16511: 2014 (E) after the floor decorative sheet is subjected to 2000 rotations in an abrasion resistance test in accordance with the European Standard EN 13329, Annex E.

A method of producing a floor decorative sheet according to one aspect of the present invention includes: preparing a floor decorative sheet which is produced by forming a print layer using an olefin-based resin, forming an upper resin layer having a thickness of 150 µm or more on a front surface of the print layer, forming a surface protective layer on a surface of the upper resin layer, forming an embossed pattern on a surface of the surface protective layer, and forming a primer layer which is in direct contact with a back surface of the print layer.

A floor decorative material according to one aspect of the present invention is a floor decorative material which includes a floor decorative sheet and a floor base material. The floor decorative sheet is attached to a surface of the floor base material. The floor decorative sheet includes a primer layer; a print layer made from an olefin-based resin; a pattern layer printed on the print layer; an upper resin layer formed of a transparent polypropylene resin; and a surface protective layer having an embossed pattern formed thereon, which are laid to overlap each other in this order in the form of a laminate. The upper resin layer has a thickness of 150 µm or more, and the primer layer and the print layer are in direct contact with each other.

A method of producing a floor decorative material according to one aspect of the present invention is a method of producing a floor decorative material obtained by attaching a floor decorative sheet on a surface of a floor base material. The method of producing a floor decorative material is characterized by producing a floor decorative sheet by forming a print layer using an olefin-based resin, forming an upper resin layer with a thickness of 150 µm or more on a front surface of the print layer, forming a surface protective layer on a surface of the upper resin layer, forming an embossed pattern on a surface of the surface protective layer, forming a primer layer which is in direct contact with the back surface of the print layer, and attaching the decorative sheet to a surface of the floor base material via the primer layer.

### [Advantageous Effects of the Invention]

According to one aspect of the present invention, it is possible to provide a floor decorative sheet having excellent scratch resistance and abrasion resistance, as well as being thin, light weight, and flexible.

### [Brief Description of the Drawings]

Fig. 1 is a cross-sectional view of a floor decorative sheet according to a first embodiment.
Fig. 2 is a cross-sectional view of a floor decorative material according to a second embodiment.
Fig. 3 is a cross-sectional view of a floor decorative sheet according to Example 4.

### [Description of the Embodiments]

### (Floor decorative sheet according to First Embodiment)

In Fig. 1, a reference number 10 denotes a floor decorative sheet according to a first embodiment, which is used for a non-vinyl chloride flooring for heavy foot traffic areas, for example.

In a floor decorative sheet 10, the following layers are successively laminated.

The following layers will be described later.
(1) Primer layer 60
(2) Print layer 20
(3) Pattern layer 30
(4) Upper resin layer 40
(5) Surface protective layer 50

### (Print layer 20)

A print layer 20 is a base sheet intended to be printed on the front surface thereof, and is made from, for example, an olefin-based resin.

The print layer 20 is made of, for example, a resin film. The resin component of the resin film is not particularly limited, but is preferably a polyethylene resin or a polypropylene resin, for example.

The print layer 20 preferably has a thickness of, for example, about 40 µm or more and 100 µm or less.

The polyolefin resin may be selected from a single substance or a plurality of substances selected from among olefin-based low-density polyethylene (LDPE), linear low-density polyethylene copolymerized with a-olefin and ethylene (LLDPE), medium-density polyethylene (MDPE), high-density polyethylene (HDPE) and polypropylene and cycloolefin polymers having homopolymers, random copolymers, block copolymers, and the like, cycloolefin copolymers copolymerized with cycloolefin, ethylene-methyl acrylate copolymer (EMA), ethylene-ethyl acrylate copolymer (EEA), ethylene-butyl acrylate copolymer (EBA), ethylene-methacrylic acid copolymer (EMAA) and the like, which are obtained by copolymerizing the olefin and vinyl acetate and by modifying the side chain of the olefin.

A solid layer may be formed on the front surface of the print layer 20 to improve adhesion between the print layer 20 and a pattern layer 30. As the solid layer, for example, a resin mixed with two-component urethane resin and vinyl chloride acetate resin can be used. A pigment is added to the resin for coloring. The solid layer is formed, for example, by coating a resin for forming a solid layer on the print layer 20. The basis weight after drying may be, for example, 1 g/m² to 3 g/m², preferably, for example, 2 g/m².

### (Pattern layer 30)

A pattern layer 30 is printed on the front surface of the print layer 20.

The pattern layer 30 is a pattern layer for imparting design properties to the floor decorative sheet 10. The pattern layer 30 can be formed by printing a pattern, for example. The thickness of the pattern layer 30 varies depending on the type of the pattern, but is generally preferably in a range of 0.1 µm or more and 10 µm or less.

Examples of the pattern include wood grain patterns, stone grain patterns, sand patterns, tiling patterns, brick patterns, fabric patterns, grain leather patterns, geometric patterns, characters, symbols, and abstract patterns. The pattern can be selected according to the purpose.

Examples of the printing technique of the pattern include gravure printing, flexographic printing, silkscreen printing, and offset printing. The printing ink may be, for example, a printing ink containing a colorant, a binder resin, and a solvent. These inks may be publicly known or commercially available.

As the colorant, for example, a pigment may be suitably used.

As for the pigment, either an inorganic pigment or an organic pigment can be used. Examples of the inorganic pigment include titanium oxide, zinc oxide, carbon black, black iron oxide, yellow iron oxide, yellow lead, molybdate orange, cadmium yellow, nickel titanium yellow, chromium titanium yellow, iron oxide (colcothar), cadmium red, ultramarine blue, dark blue, cobalt blue, chromium oxide, cobalt green, aluminum powder, bronze powder, mica titanium, and zinc sulfide.

Examples of the organic pigment include aniline black, perylene black, azo types (azo lake, insoluble azo, condensed azo), and polycyclic types (isoindolinone, isoindolines, quinophthalones, perinones, flavanthrones, anthrapyrimidines, anthraquinones, quinacridones, perylenes, diketopyrrolopyrroles, dibromoanthanthrones, dioxazines, thioindigos, phthalocyanines, indanthrones, halogenated phthalocyanines). The content of the pigment may preferably be approximately 10 parts by mass or more and 50 parts by mass or less, more preferably be approximately 15 parts by mass or more and 30 parts by mass or less, with respect to 100 parts by mass of the resin component.

The binder resin can be set according to the type of resin in the lower layer that forms the pattern layer 30.

Examples of the binder resin include an acrylic-based resin, a styrene-based resin, a polyester-based resin, a urethane-based resin, a chlorinated polyolefin-based resin, a vinyl chloride-vinyl acetate copolymer-based resin, a polyvinyl butyral resin, an alkyd-based resin, a petroleum-based resin, a ketone resin, an epoxy-based resin, a melamine-based resin, a fluorine-based resin, a silicone-based resin, a fiber derivative, and a rubber-based resin.

Examples of the solvent (or dispersion medium) include petroleum-based organic solvents such as hexane, heptane, octane, toluene, xylene, ethylbenzene, cyclohexane, and methylcyclohexane; ester-based organic solvents such as ethyl acetate, butyl acetate, 2-methoxyethyl acetate, and 2-ethoxyethyl acetate; alcohol-based organic solvents such as methyl alcohol, ethyl alcohol, normal propyl alcohol, isopropyl alcohol, isobutyl alcohol, ethylene glycol and propylene glycol; ketone-based organic solvents such as acetone, methyl ethyl ketone, methyl isobutyl ketone, and cyclohexanone; ether-based organic solvents such as diethyl ether, dioxane and tetrahydrofuran; chlorinated-based organic solvents such as dichloromethane, carbon tetrachloride, trichloroethylene and tetrachloroethylene; and water. These solvents (or dispersion media) may be used alone or in a mixture.

### (Upper resin layer 40)

An upper resin layer 40 is formed of a transparent polypropylene resin.

The upper resin layer 40 is a backing layer for shock absorption (cushioning) and the like, and is also an adhesive layer for bonding the pattern layer 30 and the surface protective layer 50 together. Additionally, the upper resin layer 40 clarifies the pattern when forming the pattern layer 30 and improves the scratch resistance of the pattern layer 30.

The resin component of the upper resin layer 40 is not particularly limited, but for example, a transparent polypropylene resin is preferable. The thickness of the upper resin layer 40 may preferably be, for example, 150 µm or more, here 150 µm or more and 200 µm or less, in order to pass the abrasion resistance test (2000 rotations).

### (Surface protective layer 50)

An embossed pattern 51 is formed on the surface of the surface protective layer 50.

The surface protective layer 50 is a topcoat layer for polishing and/or for protecting the pattern layer 30.

The resin component of the surface protective layer 50 is not particularly limited, but is preferably an ultraviolet (UV) curable resin, for example. The thickness of the surface protective layer 50 is not limited, but is preferably approximately 0.1 µm or more and 15 µm or less, for example.

Further, if the surface protective layer 50 is intended for gloss adjustment, there is, for example, a surface protective layer 50 containing a known filler such as silica.

As the method for forming the surface protective layer 50, a known method such as gravure printing, for example, can be used. If sufficient adhesion between the pattern layer 30 and the surface protective layer 50 cannot be obtained, the surface protective layer 50 may be provided after the front surface of the pattern layer 30 is subjected to adhesion-enhancing treatment (primer treatment).

When the surface protective layer 50 is formed for the purpose of applying surface strength (scratch resistance) and stain resistance to the floor decorative sheet 10, and for protecting the pattern layer 30, it is preferable to include an ionizing radiation curable resin as a resin component. As the ionizing radiation curable resin, for example, it is preferable to perform radical polymerization (curing) by electron beam irradiation.

### (Embossed pattern 51)

The surface of the surface protective layer 50 which is the uppermost surface layer of the floor decorative sheet 10 is embossed (an embossed mold using an embossed plate), and the embossed pattern 51 is formed (imparted) on the surface of the floor decorative sheet 10.

The floor decorative sheet 10 can be configured to provide more of a three-dimensional tactile feeling due to the embossed pattern 51 formed on the surface of the surface protective layer 50.

In the embossing process, for example, a concave portion having a depth of 15 µm or more may be passed between the emboss roll and a rubber back roll having a hardness of 50°C or more and less than 90°C to give the floor decorative sheet 10 an uneven shape. As the hardness measuring method, for example, JIS K -6301 A type can be used.

Examples of the embossed pattern 51 includes a wood grain plate conduit groove, a stone plate surface irregularities, a fabric surface texture, a satin, a sand grain, a hairline, and a parallel groove.

### (Primer layer 60)

A primer layer 60 is formed on the back surface of the print layer 20.

The primer layer 60 is an anchor coat layer for improving the adhesiveness of a resin. The functions of the primer layer 60 include, in addition to improving the adhesiveness of a resin, surface stabilization after the surface treatment, anticorrosion of metal surfaces, provision of adhesion, and prevention of deterioration of the adhesive.

For film sheets for normal building materials, it is common to apply primer directly to the print layer 20, which is not a problem for normal polyolefin and polyester-based original fabrics.

As the primer (primer) for forming the primer layer 60, for example, a two-component urethane resin primer can be used. The type of primer varies depending on the adherend and application. The adherend may be, for example, a plate-like member made of metal or wood.

Examples of the metal-based member include aluminum, steel, stainless steel, and a composite panel. The composite panel includes, for example, a resin layer that serves as a core material and metal plates (aluminum, galvalume, stainless steel, etc.) attached to both sides of the resin layer. Examples of the wood material include MDF (medium density fiberboard), plywood, and particleboard.

The primer layer 60 may be formed not only on the back surface of the print layer 20 but also between the respective layers of the pattern layer 30, the upper resin layer 40 and the surface protective layer 50.

### (Production method of floor decorative sheet 10)

The floor decorative sheet 10 having the above configuration is produced by the following procedure.

### (1) Formation of print layer 20

The print layer 20 is formed to have a thickness of 40 µm or more and 100 µm or less using a polyethylene resin.

### (2) Formation of pattern layer 30

The pattern layer 30 is formed by printing a wood grain pattern on the front surface of the print layer 20, using a two-component urethane resin/vinyl chloride-vinyl acetate copolymer resin binder ink having a basis weight after drying of 1 g/m² or more and 5 g/m² or less, and more preferably 3 g/m².

### (3) Formation of upper resin layer 40

A transparent polypropylene resin having a thickness of 150 µm or more, preferably 150 µm or more and 200 µm or less, was extruded and laminated on the front surface of the pattern layer 30 to form an upper resin layer 40.

### (4) Formation of surface protective layer 50

The surface protective layer 50 is formed by coating the surface of the upper resin layer 40 with an ultraviolet curable resin having a basis weight of 4 g/m² or more and 10 g/m² or less, preferably 6 g/m².

### (5) Forming the embossed pattern 51

The embossed pattern 51 is formed by embossing the surface of the surface protective layer 50 to form the embossed pattern.

### (6) Curing of surface protective layer 50

The surface protective layer 50 is irradiated with ultraviolet light to cure the ultraviolet curable resin of the surface protective layer 50.

### (7) Formation of primer layer 60

The primer layer 60 is formed by coating the back surface of the print layer 20 with a two-component urethane resin-based primer having a basis weight of 1.2 g/m² after drying.

### (Effects of First Embodiment)

According to the first embodiment, it is possible to provide a floor decorative sheet 10 that can satisfy the requirements of CLASS 33 - EN 16511: 2014 (E) after the floor decorative sheet is subjected to 2000 rotations in an abrasion resistance test in accordance with the European Standard EN 13329, Annex E.

### (Floor decorative material 100 according to Second Embodiment)

With reference to Fig. 2, a floor decorative material 100 according to a second embodiment 2 will be described.

The second embodiment is characterized in that a floor decorative material 100 is formed using the floor decorative sheet 10 according to the first embodiment and attaching the back surface of a primer layer 60 of the floor decorative sheet 10 to the surface of a floor base material 110.

The floor base material 110 is a base material such as MDF or cork, for example.

### (Production method of Floor decorative sheet 100)

The floor decorative material 100 is produced by forming the floor decorative sheet 10 according to the first embodiment and attaching the back surface of the primer layer 60 of the floor decorative material 100 to the surface of the floor base material 110.

### (Effects of Second Embodiment)

According to the second embodiment, it is possible to provide the floor decorative material 100 having an excellent effect in preventing the pattern of the floor decorative sheet 10 from being worn.

### Examples

Examples 1 to 5 and Comparative Example 1 to 3 of decorative sheets according to the present invention will be described below. The present invention should not be construed as being limited to the following Examples 1 to 5.

### (Example 1)

A decorative sheet of Example 1 was prepared as below.

Firstly, a print layer 20 having a thickness of 40 µm was formed using a polyethylene resin.

Secondly, a pattern layer 30 was formed by printing a wood grain pattern on the front surface of the print layer 20, using a two-component urethane resin/vinyl chloride-vinyl acetate copolymer resin binder ink having a basis weight after drying of 3 g/m².

Thirdly, a transparent polypropylene resin having a thickness of 150 µm was extruded and laminated on the front surface of the pattern layer 30 to form an upper resin layer 40. The upper resin layer 40 may be formed by applying a two-component urethane resin-based primer to the front surface of the pattern layer 30 to an extent that the primer has a basis weight of 1.2 g/m² after drying, followed by extruding and laminating a transparent polypropylene resin on the two-component urethane resin-based primer until the transparent polypropylene resin reaches a thickness of 150 µm.

Fourthly, an ultraviolet (UV) curable resin was coated on the surface of the upper resin layer 40 at a basis weight of 6 g/m² to form the surface protective layer 50. At this time, the surface protective layer 50 may be formed by applying a two-component urethane resin-based primer to the back surface of the pattern layer 30 to an extent that the primer has a basis weight of 4 g/m² after drying, followed by applying an ultraviolet (UV) curable resin having a basis weight of 6 g/m² on the primer.

Fifthly, the surface of the surface protective layer 50 was embossed to form an embossed pattern 51, and ultraviolet rays were irradiated to cure the ultraviolet (UV) curable resin of the surface protective layer 50.

Lastly, the primer layer 60 was formed by coating the back surface of the print layer 20 with a two-component urethane resin-based primer having a basis weight of 1.2 g/m² after drying.

In this way, a floor decorative sheet 10 was formed by successively laminating a primer layer 60; a print layer 20 having a thickness of 40 µm formed of a polyethylene resin; a pattern layer 30 printed on the print layer 20; an upper resin layer 40 having a thickness of 150 µm formed of a transparent polypropylene resin; and a surface protective layer 50 having an embossed pattern 51 formed thereon.

### (Example 2)

Example 2 is the same as Example 1 except that the thickness of the print layer 20 is 100 µm.

### (Example 3)

Example 3 is the same as Example 1 except that the thickness of the upper resin layer 40 is 200 µm.

### (Example 4)

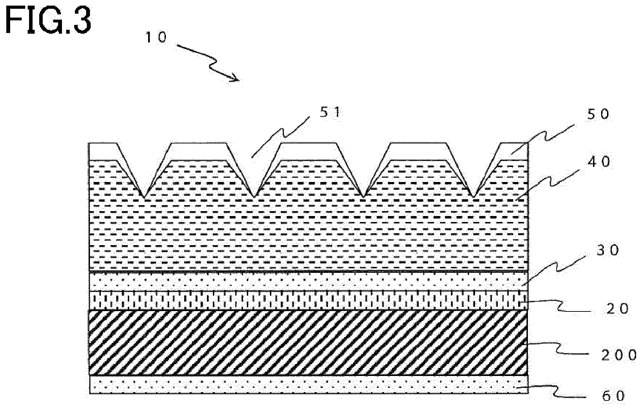

Example 4 is the same as Example 1 except that a lower resin layer 200 is formed between the print layer 20 and the primer layer 60, as shown in Fig. 3.

That is, the lower resin layer 200 is a backing layer for the purpose of shock absorption (cushioning) and the like, and is also an adhesive layer for bonding the print layer 20 and the adherend. The resin component of the lower resin layer 200 is not particularly limited, but for example, a transparent polypropylene resin is preferable. The lower resin layer 200 preferably has a thickness of, for example, about 125 µm or more and 150 µm or less, in consideration of impact resistance.

Specifically, a transparent polypropylene resin having a thickness of 125 µm was extruded and laminated on the back surface (the surface facing away from the pattern layer 30) of the print layer 20 to form the lower resin layer 200. At this time, the lower resin layer 200 may be formed by applying a two-component urethane resin-based primer to the back surface of the print layer 20 to an extent that the primer has a basis weight of 1.2 g/m² after drying, followed by applying a transparent polypropylene resin on the primer.

Lastly, the primer layer 60 was formed by coating the surface of the lower resin layer 200 (the surface facing away from the print layer 20) with a two-component urethane resin-based primer having a basis weight of 1.2 g/m² after drying.

In this way, the floor decorative sheet 10 was prepared by forming a primer layer 60; a lower resin layer 200 having a thickness of 125 µm formed of a transparent polypropylene resin; a print layer 20 having a thickness of 55 µm formed of a polyethylene resin; a pattern layer 30 printed on the print layer 20; an upper resin layer 40 having a thickness of 150 µm formed of a transparent polypropylene resin; and a surface protective layer 50 having an embossed pattern 51 formed thereon, which are laid to overlap each other in the form of a laminate.

### (Example 5)

Example 5 is the same as Example 1 except that the thickness of the upper resin layer 40 is 210 µm.

### (Comparative Example 1)

Comparative Example 1 is the same as Example 1 except that the thickness of the upper resin layer 40 is 140 µm.

### (Comparative Example 2)

Comparative Example 2 is the same as Example 1 except that the thickness of the print layer 20 is 30 µm.

### (Comparative Example 3)

Comparative Example 3 is the same as Example 1 except that the thickness of the print layer 20 is 110 µm.

### (Evaluation Method and Evaluation Criteria)

The evaluation method and evaluation criteria are as follows.

With regard to abrasion resistance, in the abrasion resistance test of CLASS 33 - EN 16511: 2014 (E) in accordance with the European Standard EN 13329, Annex E, after the floor decorative sheet is subjected to 2000 rotations under the condition that the width of the abrasion wheel (wheel) was 12.7 mm and the pressure was 5.4 N, external observation was carried out, and those without abrasion (scraping) of the pattern were determined as "pass", and the others as "fail".

### (Evaluation Results)

The evaluation results of the decorative sheets are as shown in Table 1 below.

**[Table 1]**

| | Abrasion test Each wheel (width 12.7 mm), Pressure 5.4 N | External observation | Overall evaluation |
|---|---|---|---|
| Example 1 | 2000 rotations | No abrasion observed on pattern | Pass |
| Example 2 | 2000 rotations | No abrasion observed on pattern | Pass |
| Example 3 | 2000 rotations | No abrasion observed on pattern | Pass |
| Example 4 | 2000 rotations | No abrasion observed on pattern | Pass |
| Example 5 | 2000 rotations | Abrasion observed on pattern (10% of the area of the contact area of the abrasion wheel) | Fail |
| Comparative Example 1 | 2000 rotations | Abrasion observed on pattern (10% of the area of the contact area of the abrasion wheel) | Fail |
| Comparative Example 2 | 2000 rotations | Abrasion observed on pattern (10% of the area of the contact area of the abrasion wheel) | Fail |
| Comparative Example 3 | 2000 rotations | Abrasion observed on pattern (10% of the area of the contact area of the abrasion wheel) | Fail |

Of Examples 1 to 5, the four types of decorative sheets of Examples 1 to 4 showed no abrasion (scraping) of the pattern, and thus were evaluated as a pass in the overall evaluation.

The remaining decorative sheet in Example 5 failed the overall evaluation because abrasion (scraping) of the pattern occurred in 10% of the area of the polished part of the pattern (contact area of the abrasion wheel).

All three types of decorative sheets in Comparative Examples 1 to 3 failed the overall evaluation because abrasion (scraping) of the pattern occurred in 10% of the area of the polished part of the pattern (contact area of the abrasion wheel).

### (Necessity of lower resin layer 200)

When Example 1 is compared with Example 4, it can be inferred that the presence or absence of the lower resin layer 200 did not affect the occurrence of abrasion of the pattern.

That is, although the lower limit of the thickness of the lower resin layer 40 was 150 µm in both Examples 1 and 4, and the lower resin layer 200 was not present in Example 1 but present in Example 4, there was no difference in the evaluation results.

The background of the five-layer structure is that the backing layer (lower resin layer 200 in Example 4) was initially provided as a cushioning for heavy foot traffic floor applications. Actually, although the cushioning function is often provided on the side of the floor base material 110 to which the floor decorative sheet 10 is to be attached, it was found that there is no significant advantage in providing the cushioning function in the floor decorative sheet 10. Therefore, the omission of the backing layer (lower resin layer 200) enables provision of a floor decorative sheet 10 which is less expensive and is easy to handle due to the improved flexibility due to the thinner film.

### (Regarding the thickness of upper resin layer 40)

When Example 1 is compared with Comparative Example 1, it can be inferred that the lower limit of the thickness of the upper resin layer 40 is 150 µm.

That is, in Comparative Example 1, the thickness of the upper resin layer 40 was 140 µm, and it can be inferred that the reason why the evaluation result was a fail was that the upper resin layer 40 was too thin.

When Example 1 is compared with Example 5, it can be inferred that the lower limit of the thickness of the upper resin layer 40 is 200 µm.

That is, in Example 5, the thickness of the upper resin layer 40 was 210 µm, and it can be inferred that the reason why the evaluation result was a fail was that the upper resin layer 40 was too thick.

### (Regarding the thickness of print layer 20)

When Example 3 is compared with Comparative Example 2, it can be inferred that the lower limit of the thickness of the print layer 20 is 40 µm.

That is, in Example 3, the thickness of the print layer 20 was 40 µm, which was thinner than the commonly used thickness of 55 µm, but an evaluation result the same as that of 55 µm was obtained.

Further, in Comparative Example 2, it can be inferred that the reason why the evaluation result was a fail was that the thickness of the printing layer 20, which was experimentally set to 30 µm, was too thin.

When Example 2 is compared with Comparative Example 3, it can be inferred that the upper limit of the thickness of the print layer 20 is 100 µm.

That is, in Comparative Example 3, the thickness of the print layer 20 was 110 µm, and it can be inferred that the reason why the evaluation result was a fail was that the print layer 20 was too thick.

### [Reference Signs List]

10 Floor decorative sheet
20 Print layer
30 Pattern layer
40 Upper resin layer
50 Surface protective layer
51 Embossed pattern
60 Primer layer
100 Floor decorative material
110 Floor base material
200 Lower resin layer

## Claims

1. A floor decorative sheet comprising:
a primer layer;
a print layer made from an olefin-based resin;
a pattern layer printed on the print layer;
an upper resin layer made from a transparent polypropylene resin; and
a surface protective layer having an embossed pattern formed thereon, wherein
the primer layer, the print layer, the pattern layer, the upper resin layer, and the surface protective layer are laid to overlap each other in this order in a form of a laminate,
the upper resin layer has a thickness of 150 µm or more, and
the primer layer and the print layer are in direct contact with each other.

2. The floor decorative sheet according to claim 1, wherein
the print layer has a thickness of 40 µm or more and 100 µm or less, and
the upper resin layer has a thickness of 200 µm or less.

3. The floor decorative sheet according to claim 1 or 2, wherein the floor decorative sheet satisfies requirements of CLASS 33 - EN 16511: 2014 (E) after the floor decorative sheet is subjected to 2000 rotations in an abrasion resistance test in accordance with European Standard EN 13329, Annex E.

4. A method of producing a floor decorative sheet comprising:
forming a print layer using an olefin-based resin;
forming an upper resin layer having a thickness of 150 µm or more on a front surface of the print layer;
forming a surface protective layer on a surface of the upper resin layer;
forming an embossed pattern on a surface of the surface protective layer; and
forming a primer layer which is in direct contact with a back surface of the print layer.

5. A floor decorative material comprising a floor decorative sheet and a floor base material, wherein
the floor decorative sheet is attached to a surface of the floor base material,
the floor decorative sheet includes a primer layer, a print layer made from an olefin-based resin, a pattern layer printed on the print layer, an upper resin layer made from a transparent polypropylene resin, and a surface protective layer having an embossed pattern formed thereon, the primer layer, the print layer, the pattern layer, the upper resin layer, and the surface protective layer being laid to overlap each other in this order in a form of a laminate,
the upper resin layer has a thickness of 150 µm or more, and
the primer layer and the print layer are in direct contact with each other.

6. A method of producing a floor decorative material comprising:
preparing a floor decorative sheet which is produced by forming a print layer using an olefin resin, forming an upper resin layer having a thickness of 150 µm or more on a front surface of the print layer, forming a surface protective layer on a surface of the upper resin layer, forming an embossed pattern on a surface of the surface protective layer; and forming a primer layer which is in direct contact with a back surface of the print layer; and
attaching the floor decorative sheet to a surface of a floor base material via the primer layer.
